# EUROPÄISCHE PATENTSCHRIFT

(11) **EP 1 908 547 B1**
(45) Veröffentlichungstag und Bekanntmachung des Hinweises auf die Patenterteilung: **16.01.2013**
(21) Anmeldenummer: 07019556.5
(22) Anmeldetag: 05.10.2007
(51) Int. Cl.: B23K 33/00, B62D 25/04, B62D 27/02, B62D 29/00, B23K 37/00, B23K 35/30

(54) **Verbund mit zwei zusammengeschweißten Blechen**
Welded assembly of two metal sheets
Assemblage composé de deux tôles soudées

(30) Priorität: 05.10.2006 DE 102006047582; 05.10.2006 DE 202006015367 U
(43) Veröffentlichungstag der Anmeldung: 09.04.2008
(73) Patentinhaber: GM Global Technology Operations LLC, Detroit, MI 48265-3000 (US)
(72) Erfinder: Eberlein, Wolfgang, 65193 Wiesbaden (DE)
(74) Vertreter: Daniel, Ulrich W.P.

(56) Entgegenhaltungen:
- WO-A1-2006/050688
- DE-A1- 3 233 048
- JP-A- 7 172 344
- JP-A- 2003 103 377

## Beschreibung

Die Erfindung betrifft einen Verbund aus mindestens zwei Blechen sowie ein Bauteil, beispielsweise eine Hochstrebe eines Pkw, das diesen Verbund umfasst. Weiterhin betrifft die Erfindung eine B-Säule eines Kraftfahrzeugs.

Bei der Herstellung von Kfz-Karosserien werden häufig Bleche aus gehärtetem Stahl eingesetzt, die entweder miteinander oder mit anderen Blechen verschweißt werden müssen. Die gehärteten Stähle dienen unter anderem dazu, den zunehmend strengeren Anforderungen gerecht zu werden, die zum Schutz der Fahrzeuginsassen erhoben werden. Zu diesem Zweck gibt es in den jeweiligen Staaten, in denen das Kraftfahrzeug zugelassen werden soll, standardisierte Aufpralltests, die ein Fahrzeugmodell vor der Zulassung bestehen muss, um zugelassen zu werden. In Europa sind dies beispielsweise die Tests nach Euro-NCAP (European New Car Assessment Programme).

JP 2003 103377A beschreibt die Verwendung hochfester Stähle beim Kraftfahrzeugkarosseriebau und versucht, das Problem der Rissbildung beim Schweißen solcher Stähle über die Steuerung des zeitlichen Ablaufs des Schweißprozesses in den Griff zu bekommen.

JP 7 172344 A zeigt eine Säule einer Kraftfahrzeugkarosserie, die aus mehreren entlang ihrer Ränder verschweißten Blechen zusammengefügt ist. Von den einander berührenden Flanschen an den Rändern der Bleche ist ein erster zwischen den Schweißpunkten auf nahezu seiner gesamten Breite weggeschnitten, so dass ein zweiter Flansch in den Ausschnitten des ersten Flansches weiter über dessen Rand vorspringt als in Höhe der Schweißstellen.

DE 32 33 048 zeigt eine Schweißverbindung für Karosseriebleche, bei der Aufschmelz- und Widerstandsschweißpunkte entlang zweier einander berührender Randstreifen eines ersten und eines zweiten Karosserieblechs verteilt sind. In Höhe der Aufschmelzschweißpunkte ist einer der beiden Randstreifen eingeschnitten, so dass an diesen Stellen der Rand des zweiten Randstreifens über den des ersten Randstreifens vorspringt.

Es ist eine Aufgabe einer Ausführungsform der Erfindung, einen Verbund aus mindestens zwei miteinander verschweißten Blechen, von denen mindestens eines aus einem gehärteten Stahl besteht, bereitzustellen, dessen Verschweißung selbst einer extremen mechanischen Beanspruchung standhält.

Die Aufgabe einer weiteren Ausführungsform besteht in der Bereitstellung eines Bauteils, das diesen Verbund umfasst.

Ferner besteht eine Aufgabe einer Ausführungsform der Erfindung darin, eine B-Säule für Kraftfahrzeuge, insbesondere Pkw, bereitzustellen, die bei einem Seitenaufprall einen verbesserten Fahrzeuginsassenschutz bietet.

Die Lösung dieser Aufgaben erfolgt mit den Merkmalen der unabhängigen Ansprüche. Vorteilhafte Weiterbildungen und weitere Ausführungsformen ergeben sich mit den Merkmalen der abhängigen Ansprüche.

Ein erster Aspekt der Erfindung betrifft einen Verbund aus einem ersten und einem zweiten Blech. Bei diesem Verbund haben die Bleche einen gemeinsamen Flansch, wo sie miteinander verschweißt sind. Das zweite Blech besteht aus einem gehärteten Stahl, dessen Martensit- und/oder Bainitanteil im Querschliff größer als 50 % ist und dessen Zugfestigkeit größer als 800 MPa ist. Der Rand des zweiten Blechs ragt im Flanschbereich an den Schweißstellen um 1 bis 3 mm über den Rand des ersten Blechs hinaus und ragt damit weiter über den Rand des ersten Blechs hinaus als zwischen den Schweißstellen. Ragt er an den Schweißstellen weniger als 1 mm weiter nach draußen als zwischen den Schweißstellen, so ist die Spannung an der Schweißstelle zu groß. Bei mehr als 3 mm wird das Grundmaterial zwischen zwei Schweißstellen zu stark beansprucht. Beste Ergebnisse ergaben sich bei 2 mm +/- 0.5 mm.

Der Verbund umfasst insofern ein Blech aus einem gehärteten Stahl der oben angegebenen Zusammensetzung. Bei seiner Herstellung wird dieser Stahl in einem bekannten Verfahren durch Wärmebehandlung mit schnellem Abkühlen gehärtet, wodurch sich ein Ungleichgewichtsgefüge einstellt, das den Stahl besonders hart macht. Wird ein derart gehärteter Stahl mit einem weiteren Blech verschweißt, so stellt der Schweißvorgang eine lokale Wärmebehandlung des Stahls dar, die das Gefüge im Schweißbereich erneut verändern kann. Wird die Schweißstelle nach der eigentlichen Schweißung rasch abgekühlt, wie es beispielsweise beim Punktschweißen mit wassergekühlten Schweißelektroden der Fall ist, wird das Material im Schweißfleck erneut ein Ungleichgewichtsgefüge mit der gewünschten Härte haben.

Es wird vermutet, dass oftmals das Material in einem gewissen Randbereich des Schweißflecks, in der so genannten Wärmeeinflusszone, um den eigentlichen Schweißfleck herum nicht rasch abgekühlt wird. Das Material in der Wärmeeinflusszone würde somit durch die Schweißung stark erwärmt werden und dann mangels nachträglicher Kühlung nur langsam abkühlen. Metallurgische Untersuchungen haben ergeben, dass sich in der Wärmeeinflusszone ein weicheres Gefüge mit weniger oder gar keinem Ungleichgewichtsgefüge ausbildet. Der Stahl zeigt in dieser Wärmeeinflusszone eine geringere Härte als im Schweißfleck oder im Grundmaterial. Mit anderen Worten hat das zweite Blech in der Wärmeeinflusszone ein Härteminimum.

Wird ein Verbund, der einen derartigen Schweißbereich besitzt, einer extremen Zugbelastung ausgesetzt, so kommt es zu einem Fließen des Stahlmaterials. Wegen des Härteminimums wird es fast ausschließlich in der vorgenannten Wärmeeinflusszone zum Fließen kommen und sich dort ein Riss ausbilden, der sich anschließend durch das Grundmaterial fortpflanzt und insofern die Strukturstabilität des Verbunds begrenzt. Dasselbe gilt sinngemäß auch bei einer Biegebeanspruchung des Verbunds, die eine entsprechende Zugbelastung zur Folge hat.

Der Rissvermeidung dient eine Ausgestaltung des zweiten Blechs, bei der sein Rand im Flanschbereich an den Schweißstellen weiter nach draußen ragt als zwischen den Schweißstellen. Dadurch wird die Spannung an den Schweißstellen herabgesetzt und wird entsprechend ein Fließen des Grundmaterials zwischen den Schweißstellen gefördert.

Zur Bestimmung des Bainit- und/oder Martensitgehalts des zweiten Blechs wird ein Stück entnommen und so eingebettet, geschliffen und geätzt, dass man bei der Bestimmung auf den Querschnitt des zweiten Bleches blickt. Aufgrund des unterschiedlichen Ätzverhaltens der einzelnen Gefügebestandteile erkennt man die einzelnen Gefügebestandteile. Die einzelnen Gefügebestandteile sind dreidimensional, wobei Martensit und Bainit nadelförmig erscheinen. Der Flächenanteil im Schliff wird per Software durch Unterscheidung von Graustufen bestimmt. Hierzu kann das Programm "IMAGE C" der IMTRONIC GmbH, Berlin, eingesetzt werden. Eine lichtmikroskopische Zuordnung von Anteilen des Schliffbildes zu Bainit oder Martensit ist manchmal nicht möglich.

Aus den obigen Ausführungen ergibt sich, dass der Flansch nicht mit einer einzigen länglichen Schweißnaht versehen ist, sondern eine Mehrzahl lokaler, voneinander beabstandeter Schweißstellen besitzt. Es kann sich hierbei um voneinander beabstandete strichförmige Schweißungen oder um Punktschweißungen handeln. Handelt es sich um eine Sequenz von Schweißstellen, so wird der Flansch im Regelfall ein länglicher, bandförmiger Flansch sein.

Zwecks Gewichtsersparnis ist es gemäß einer zweiten Ausführungsform auch möglich, das erste Blech ebenfalls so auszugestalten, dass es an den Schweißstellen weiter nach draußen ragt als zwischen den Schweißstellen. In diesem Fall ergibt sich ein Flansch, der an den Schweißstellen breiter ist als zwischen den Schweißstellen.

In einer dritten Ausführungsform sind die Bleche über Punktschweißungen miteinander verschweißt.

Die oben genannte Anpassung des Rands des zweiten Blechs an die Orte der Schweißstellen kann gemäß einer weiteren Ausführungsform so realisiert werden, dass der Rand einen wellenförmigen Rand hat. Diese Ausführungsform ist bei regelmäßig gesetzten Punktschweißungen praktikabel.

Gemäß dem oben gegebenen Erklärungsversuch für das Verhalten des Verbunds bei extremer mechanischer Beanspruchung im Bereich der Schweißstellen ergibt sich die Problematik der Gefügeveränderungen wegen Schweißoperationen bei gehärteten Stählen mit Ungleichgewichtsgefügen. Demgemäß kann das zweite Blech aus einem Verfügungsstahl, einem Dualphasenstahl, einem Komplexphasenstahl, einem TRIP-Stahl oder einem martensitischen Stahl bestehen. Der Vergütungsstahl kann zum Beispiel 22 MnB5 sein.

In einer weiteren Ausführungsform umfasst der Verbund ein drittes Blech, wobei sich das zweite Blech zwischen dem ersten und dem dritten Blech befindet und bei dem die drei Bleche im gemeinsamen Flansch miteinander verschweißt sind. Die Schweißstellen sind hier 3-Blechschweißungen.

Ein zweiter Aspekt der Erfindung betrifft ein Bauteil, das einen Verbund gemäß einer der oben beschriebenen Ausführungsformen umfasst. Das Bauteil kann eine Hochstrebe eines Pkw sein, d.h. eine A-, B- oder C-Säule. Bei solchen Hochstreben ist dies z.B. die Seitenwand außen mit einer Verstärkung und der Seitenwand innen verschweißt. Bei einer solchen 3-Blechschweißung im Sinne des letzten Absatzes besteht die Verstärkung. z.B. die Verstärkung B-Säule, oftmals aus einem gehärteten Stahl, damit die Karosserie die Euro-NCAP-Tests für den Seitenaufprall mit starrer Barriere besteht. Der gehärtete Stahl kann ein PHS-Stahl (englisch: press hardened steel) sein. Die Seitenwände außen und innen bestehen aus Bandstahl mit geringerer Zugfestigkeit.

Ein dritter Aspekt betrifft eine B-Säule für eine Kfz-Karosserie. Die B-Säule umfasst eine Seitenwand innen, eine Seitenwand außen und eine dazwischen befindliche Verstärkung B-Säule. Die beiden genannten Seitenwände und die Verstärkung B-Säule bilden einen gemeinsamen Flansch aus, wo sie miteinander verschweißt sind. Die Schweißung ist damit eine 3-Blechschweißung. Die Verstärkung B-Säule ist ein Blech aus einem gehärteten Stahl, dessen Martensit- und/oder Bainitanteil im Querschliff größer als 50 % ist und dessen Zugfestigkeit größer als 800 MPa ist. Der gehärtete Stahl kann ein PHS-Stahl (englisch: press hardened steel) sein. Die Seitenwände außen und innen bestehen aus Bandstahl mit geringerer Zugfestigkeit. Der Rand der Verstärkung B-Säule im Flanschbereich ragt an den Schweißstellen weiter nach draußen als zwischen den Schweißstellen. Dies kann so realisiert werden, dass nicht nur die Verstärkung B-Säule, sondern der gesamte Flansch an den Schweißstellen breiter ist als zwischen den Schweißstellen. Der Rand der Verstärkung B-Säule oder der Rand des Flansches kann hierbei wellenförmig sein.

Weitere Merkmale und Vorteile der beanspruchten Erfindung werden aus der folgenden detaillierten Beschreibung mit Bezug auf die beigefügten Zeichnungen erkennbar, die nachfolgend als nicht beschränkende Beispiele angegeben sind. Hierbei soll die Benutzung von Bezugszeichen in den Figuren nicht dahingehend verstanden werden, dass die Bezugszeichen den Schutzumfang der beanspruchten Erfindung einschränken sollen. Es zeigen:
- Fig. 1: eine B-Säule eines Pkw,
- Fig. 2: ein Detail eines Schweißbereichs.

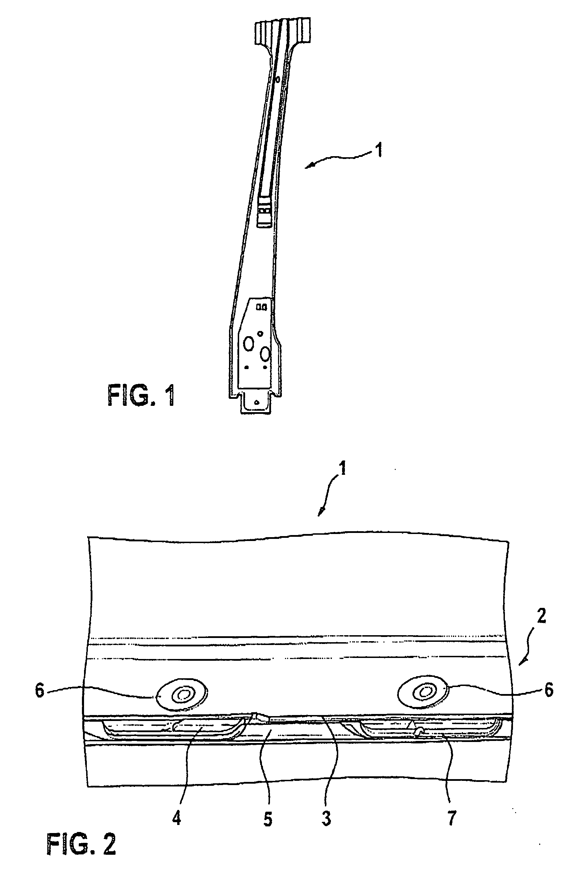

Bei den Figuren, die allgemein mit gleichen Bezugszeichen gleiche Gegenstände bezeichnen, zeigt Figur 1 eine B-Säule 1 eines Pkw. Zu seiner Herstellung wird eine Verstärkung B-Säule zwischen einer Seitenwand außen und einer Seitenwand innen platziert und die drei Bleche miteinander verschweißt.

Figur 2 zeigt einen Schweißbereich der B-Säule 1 in einer vergrößerten Darstellung. Die B-Säule 1 besitzt einen Flansch 2, wo ein erstes Blech 3, ein zweites Blech 4 und ein drittes Blech 5 über Punktschweißungen 6 miteinander verschweißt sind. Während die Bleche 3 und 5 aus dünnem DC04 nach EN 10130 der Materialstärke 0,75 mm besteht ist das dritte, als Verstärkung B-Säule dienende Blech 5 aus 22 MnB5 und hat eine Blechstärke von 1,7 mm.

Aus Figur 2 erkennt man, dass das zweite Blech 4 im Bereich der Punktschweißungen 6 über den Rand des ersten Blechs 3 hinausragt und bündig mit dem Rand des dritten Blechs 5 abschließt. In der Mitte zwischen den zwei Punktschweißungen hingegen verschwindet das zweite Blech 4 unter dem ersten Blech 3, weil es dort schmaler ist. Der Rand 7 des zweiten Blechs 4 ragt damit an den Schweißstellen 6 weiter nach draußen als zwischen den Schweißstellen 6.

Obwohl vorstehend konkrete Ausführungsformen beschrieben wurden, wird der Fachmann erkennen, dass die Beschreibung dieser Ausführungsformen nicht zum Zweck hat, die Erfindung in der angegebenen Form zu beschränken. Die Erfindung soll vielmehr alle Modifikationen, Äquivalente und Alternativen umfassen, die in den Schutzumfang der beanspruchten Erfindung fallen.

### Bezugszeichenliste

- 01: B-Säule
- 02: Flansch
- 03: erstes Blech / Seitenwand außen
- 04: zweites Blech / Verstärkung B-Säule
- 05: drittes Blech / Seitenwand innen
- 06: Punktschweißung
- 07: Rand

## Patentansprüche

1. Verbund, umfassend ein erstes Blech (3)und ein zweites Blech (4), bei dem die Bleche einen gemeinsamen Flansch (2) ausbilden, wo sie miteinander verschweißt sind, wobei der Rand (7) des zweiten Blechs im Flanschbereich an den Schweißstellen weiter über den Rand des ersten Blechs (3) hinausragt als zwischen den Schweißstellen (6), **dadurch gekennzeichnet, dass** das zweite Blech aus einem gehärteten Stahl besteht, dessen Martensit- und/oder Bainitanteil im Querschliff größer als 50 % ist und dessen Zugfestigkeit größer als 800 MPa ist, und dass das zweite Blech an Schweißstellen ca. 1 mm bis ca. 3 mm weiter über den Rand des ersten Blechs (3) hinausragt als zwischen zwei Schweißstellen.

2. Verbund nach Anspruch 1, dessen Flansch an den Schweißstellen breiter ist als zwischen den Schweißstellen.

3. Verbund nach einem der vorherigen Ansprüche, bei dem die Bleche über Punktschweißungen miteinander verschweißt sind.

4. Verbund nach einem der vorherigen Ansprüche, bei dem das zweite Blech an den Schweißstellen ca. 1.5 mm bis ca. 2.5 mm weiter über den Rand des ersten Blechs (3) hinausragt als zwischen zwei Schweißstellen.

5. Verbund nach einem der vorherigen Ansprüche, bei dem der Rand des zweiten Blechs wellenförmig ist.

6. Verbund nach einem der vorherigen Ansprüche, bei dem das zweite Blech aus einem Verfügungsstahl, einem Dualphasenstahl, einem Komplexphasenstahl, einem TRIP-Stahl oder einem martensitischen Stahl besteht.

7. Verbund nach einem der vorherigen Ansprüche, bei dem das zweite Blech aus 22 MnB5 besteht.

8. Verbund nach einem der vorherigen Ansprüche, mit einem dritten Blech, wobei sich das zweite Blech zwischen dem ersten und dem dritten Blech befindet und bei dem die drei Bleche im gemeinsam ausgebildeten Flansch miteinander verschweißt sind.

9. Bauteil, umfassend einen Verbund nach einem der vorherigen Ansprüche.

10. Bauteil nach Anspruch 9, ausgebildet als Hochstrebe eines Pkw.

11. B-Säule (1) für eine Kfz-Karosserie, umfassend einen Verbund nach Anspruch 9, wobei eine Seitenwand innen (5), eine Seitenwand außen (3) und eine dazwischen befindliche Verstärkung B-Säule (4) jeweils das erste bzw. dritte Blech, das dritte bzw. erste Blech und das zweite Blech darstellen.

12. B-Säule nach Anspruch 11, bei der der Flansch an den Schweißstellen breiter ist als zwischen den Schweißstellen.

13. B-Säule nach Anspruch 11 oder 12, bei der der Rand der Verstärkung B-Säule oder der Rand des Flansches wellenförmig ist.

14. B-Säule nach einem der Ansprüche 11 bis 13, bei der die Bleche über Punktschweißungen miteinander verschweißt sind.

15. B-Säule nach einem der Ansprüche 11 bis 14, bei der die Verstärkung B-Säule an Schweißstellen ca. 1 mm bis ca. 3 mm weiter nach draußen ragt als zwischen zwei Schweißstellen.

16. B-Säule nach einem der Ansprüche 11 bis 15, bei der die Verstärkung B-Säule an den Schweißstellen ca. 1.5 mm bis ca. 2.5 mm weiter nach draußen ragt als zwischen zwei Schweißstellen.

17. B-Säule nach einem der Ansprüche 11 bis 16, bei der die Verstärkung B-Säule aus einem Verfügungsstahl, einem Dualphasenstahl, einem Komplexphasenstahl, einem TRIP-Stahl oder einem martensitischen Stahl besteht.

18. B-Säule nach einem der Ansprüche 11 bis 17, bei der die Verstärkung B-Säule aus 22 MnB5 besteht.

## Claims

1. An assembly, comprising a first sheet (3) and a second sheet(4), in which the sheets form a common flange (2) where they are welded together, with the edge (7) of the second sheet protruding in the flange region at the welding points further beyond the edge of the first sheet (3) than between the welding points (6), **characterized in that** the second sheet consists of a hardened steel whose martensite and/or bainite fraction is larger than 50% in the polish of cross section and whose tensile strength is higher than 800 MPa, and that the second sheet protrudes at the welding points approximately 1 mm to approximately 3 mm further beyond the edge of the first sheet (3) than between two welding points.

2. An assembly according to claim 1, the flange of which is wider at the welding points than between the welding points.

3. An assembly according to one of the preceding claims,
wherein the sheets are welded together by means of spot-welding.

4. An assembly according to one of the preceding claims,
wherein the second sheet protrudes at the welding points approximately 1.5 mm to approximately 2.5 mm further beyond the edge of the first sheet (3) than between two welding points.

5. An assembly according to one of the preceding claims,
wherein the edge of the second sheet is undulating.

6. An assembly according to one of the preceding claims,
wherein the second sheet consists of a tempered steel, dual-phase steel, complex-phase steel, a TRIP steel or a martensitic steel.

7. An assembly according to one of the preceding claims,
wherein the second sheet consists of 22 MnB5.

8. An assembly according to one of the preceding claims,
comprising a third sheet, with the second sheet being disposed between the first and third sheet, and in which the three sheets are welded together in a jointly arranged flange.

9. A component, comprising an assembly according to one of the preceding claims.

10. A component according to claim 9, arranged as a top strut of a passenger car.

11. A B-pillar (1) for the body of a passenger car, comprising an assembly according to claim 9, with an inside side wall (5), an outside side wall (3) and an interposed reinforcement of the B-pillar (4) respectively representing the first and third sheet, the third and first sheet and the second sheet.

12. A B-pillar according to claim 11, wherein the flange at the welding points is wider than between the welding points.

13. A B-pillar according to claim 11 or 12, wherein the edge of the reinforcement of the B-pillar or the edge of the flange is undulating.

14. A B-pillar according to one of the claims 11 to 13, wherein the sheets are welded together by way of spot-welding.

15. A B-pillar according to one of the claims 11 to 14, wherein the reinforcement of the B-pillar protrudes further to the outside at the welding points by approximately 1 mm to approximately 3 mm than between two welding points.

16. A B-pillar according to one of the claims 11 to 15, wherein the reinforcement of the B-pillar protrudes further to the outside at the welding points by approximately 1.5 mm to approximately 2.5 mm than between two welding points.

17. A B-pillar according to one of the claims 11 to 16, wherein the reinforcement of the B-pillar consists of a tempered steel, dual-phase steel, complex-phase steel, a TRIP steel or a martensitic steel.

18. A B-pillar according to one of the claims 11 to 17, wherein the reinforcement of the B-pillar consists of 22 MnB5.

## Revendications

1. Matériau sandwich comprenant une première tôle (3) et une deuxième tôle (4), dans lequel les tôles forment une bride (2) commune où elles sont soudées ensemble, le bord (7) de la deuxième tôle dépassant plus loin au-delà du bord de la première tôle (3) au niveau de la bride à l'endroit des points de soudage qu'entre les points de soudage (6), **caractérisé en ce que** la deuxième tôle se compose d'un acier durci dont la composante martensitique et/ou bainitique est supérieure à 50 % en coupe transversale micrographique et dont la résistance à la traction est supérieure à 800 MPa, et **en ce que** la deuxième tôle dépasse d'environ 1 mm à environ 3 mm plus loin au-delà du bord de la première tôle (3) aux points de soudage qu'entre deux points de soudage.

2. Matériau sandwich selon la revendication 1, dont la bride est plus large au niveau des points de soudage qu'entre les points de soudage.

3. Matériau sandwich selon l'une des revendications précédentes, dans lequel les tôles sont soudées l'une à l'autre par des soudures par points.

4. Matériau sandwich selon l'une des revendications précédentes, dans lequel la deuxième tôle dépasse d'environ 1,5 mm à environ 2,5 mm plus loin au-delà du bord de la première tôle (3) aux points de soudage qu'entre deux points de soudage.

5. Matériau sandwich selon l'une des revendications précédentes, dans lequel le bord de la deuxième tôle est ondulé.

6. Matériau sandwich selon l'une des revendications précédentes, dans lequel la deuxième tôle se compose d'un acier traité, d'un acier biphasé, d'un acier à phase complexe, d'un acier TRIP ou d'un acier martensitique.

7. Matériau sandwich selon l'une des revendications précédentes, dans lequel la deuxième tôle se compose de 22 MnB5.

8. Matériau sandwich selon l'une des revendications précédentes avec une troisième tôle, dans lequel la deuxième tôle se trouve entre la première tôle et la troisième et dans lequel les trois tôles sont soudées les unes aux autres dans la bride formée ensemble.

9. Composant comprenant un matériau sandwich selon l'une des revendications précédentes.

10. Composant selon la revendication 9 conformé comme le montant d'une voiture.

11. Montant B (1) pour une carrosserie de véhicule à moteur comprenant un matériau sandwich selon la revendication 9, dans lequel une paroi latérale intérieure (5), une paroi latérale extérieure (3) et un renfort de montant B (4) situé entre celles-ci forment respectivement la première tôle ou la troisième, la troisième tôle ou la première et la deuxième tôle.

12. Montant B selon la revendication 11, dans lequel la bride est plus large au niveau des points de soudage qu'entre les points de soudage.

13. Montant B selon la revendication 11 ou 12, dans lequel le bord du renfort de montant B ou le bord de la bride est ondulé.

14. Montant B selon l'une des revendications 11 à 13, dans lequel les tôles sont soudées entre elles par des soudures par points.

15. Montant B selon l'une des revendications 11 à 14, dans lequel le renfort de montant B dépasse d'environ 1 mm à environ 3 mm plus loin vers l'extérieur au niveau des points de soudage qu'entre deux points de soudage.

16. Montant B selon l'une des revendications 11 à 15, dans lequel le renfort de montant B dépasse d'environ 1,5 mm à environ 2,5 mm plus loin vers l'extérieur au niveau des points de soudage qu'entre deux points de soudage.

17. Montant B selon l'une des revendications 11 à 16, dans lequel le renfort de montant B se compose d'un acier traité, d'un acier biphasé, d'un acier à phase complexe, d'un acier TRIP ou d'un acier martensitique.

18. Montant B selon l'une des revendications 11 à 17, dans lequel le renfort de montant B se compose de 22 MnB5.
